(19) Europäisches Patentamt
European Patent Office
Office européen des brevets

(11) **EP 3 002 554 B1**

(12) **FASCICULE DE BREVET EUROPEEN**

(45) Date de publication et mention
de la délivrance du brevet:
**01.03.2017 Bulletin 2017/09**

(51) Int Cl.:
*G01C 21/02* (2006.01)　　*B64G 1/36* (2006.01)
*G01C 21/24* (2006.01)　　*G01D 5/26* (2006.01)
*G01S 3/781* (2006.01)

(21) Numéro de dépôt: **15185252.2**

(22) Date de dépôt: **15.09.2015**

(54) **DISPOSITIF ET PROCEDE DE POSITIONNEMENT D'UN CAPTEUR STELLAIRE SUR LA STRUCTURE D'UN ENGIN SPATIAL**

VORRICHTUNG UND VERFAHREN ZUR POSITIONIERUNG EINES STERNENSENSORS AUF DER STRUKTUR EINES RAUMSCHIFFS

DEVICE AND METHOD FOR POSITIONING A STAR SENSOR ON THE STRUCTURE OF A SPACECRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2014 FR 1402241**

(43) Date de publication de la demande:
**06.04.2016 Bulletin 2016/14**

(73) Titulaire: **THALES**
**92400 Courbevoie (FR)**

(72) Inventeurs:
 • **DAZIN, Sébastien**
 **06210 MANDELIEU (FR)**
 • **DI GIORGIO, Fabio**
 **00167 ROME (IT)**
 • **FORESTIER, Damien**
 **06580 PEGOMAS (FR)**

(74) Mandataire: **Derval, Estelle et al**
**Marks & Clerk France**
**Conseils en Propriete Industrielle**
**Immeuble Visium**
**22, avenue Aristide Briand**
**94117 Arcueil Cedex (FR)**

(56) Documents cités:
**FR-A1- 2 816 406**

 • **Airbus: "muSTOS: A powerful planetarium to stimulate star sensors", , 1 janvier 2014 (2014-01-01), XP055244741, Extrait de l'Internet: URL:http://www.space-airbusds.com/media/document/datasheet_%C2%B5stos_2016-01.pdf [extrait le 2016-01-26]**

**Description**

L'invention concerne un dispositif et un procédé de positionnement des axes fonctionnels d'un capteur stellaire fixé sur la structure d'un engin spatial, notamment d'un satellite. Le dispositif et le procédé sont mis en oeuvre dans une phase d'assemblage et de test de l'engin spatial, notamment d'un satellite.

Le positionnement et l'orientation d'un engin spatial par rapport à la terre et l'espace sont des paramètres essentiels au fonctionnement de l'engin. Dans le cas d'un satellite, on cherche d'une part à contrôler l'orbite du satellite autour de la terre au travers des six paramètres orbitaux (demi grand-axe, excentricité, inclinaison, argument du noeud ascendant, argument du périgée et anomalie vraie). On cherche également à connaitre voire stabiliser l'orientation du satellite par rapport à la terre et l'espace. Diverses techniques sont mises en oeuvre pour quantifier ces paramètres orbitaux et réaliser les opérations nécessaires pour maintenir le satellite dans une zone recherchée et selon une orientation voulue. On connait par exemple des satellites géostationnaires stabilisés selon trois axes, orientés vers la terre pour permettre le fonctionnement de divers instruments tels que des systèmes de télécommunications. Les systèmes de contrôle d'attitude et d'orbite, généralement dénommés par leur acronyme SCAO, nécessitent de connaitre la position et l'orientation du satellite avec une grande précision. Pour cela, les systèmes SCAO mettent en oeuvre plusieurs technologies de capteurs tels qu'un capteur stellaire, un capteur soleil ou encore un capteur terre.

De manière connue, le capteur stellaire comprend des moyens de mesure optique (par exemple, un capteur CCD) permettant de prendre des images de la voute céleste, et un organe de traitement de ces images permettant de positionner et orienter un trièdre fonctionnel du capteur stellaire par rapport à l'espace. En analysant le champ d'étoile imagé à l'aide d'un catalogue d'étoiles embarqué, le capteur stellaire positionne les axes de son trièdre fonctionnel dans l'espace. Connaissant la position du capteur stellaire sur le satellite, le système SCAO déduit la position et l'orientation du satellite dans l'espace. Le document: Airbus: "μSTOS: A powerful planetarium to stimulate star sensors", 1 janvier 2014 (2014-01-01), Extrait de l'internet: URL:http://www.space-airbusds.com/media/document/ datasheet_μstos_201 6-01.pdf divulgue un dispositif pour positionner un trièdre fonctionnel d'un capteur stellaire dans un trièdre de référence lié à une structure d'un engin spatial sur laquelle est monté le capteur stellaire , le dispositif comprenant une interface de fixation destinée à connecter le dispositif au capteur stellaire, un simulateur optique comprenant un ensemble de repères optiques destinés à être mesurés par le capteur stellaire, permettant de positionner par calcul le trièdre fonctionnel du capteur stellaire dans le trièdre de référence. Le document FR2816406 divulgue un banc de test au sol d'un senseur stellaire.

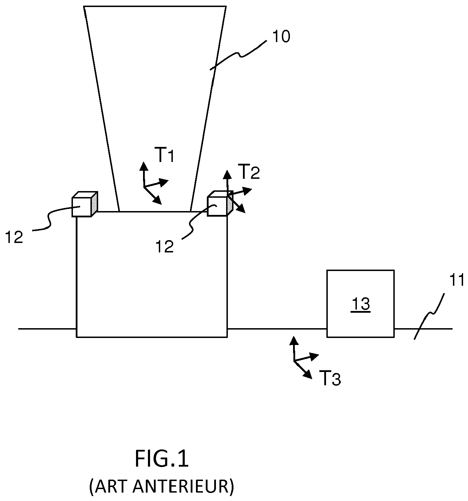

La précision du positionnement du satellite dans l'espace est essentielle au fonctionnement du satellite et au déroulement de sa mission. Toute imprécision d'alignement entraine l'ajout d'un biais constant sur le pointage du satellite. Il est donc essentiel de positionner avec précision le trièdre fonctionnel du capteur stellaire dans un trièdre de référence lié au satellite. La **figure 1** illustre le principe de l'opération d'alignement du capteur stellaire sur le satellite selon l'état connu de la technique. Un capteur stellaire 10 est fixé sur la structure 11 d'un satellite. Le capteur stellaire comprend des moyens de mesure optique et un organe de traitement permettant de positionner le trièdre de référence T1 du capteur stellaire par rapport à un référentiel lié aux étoiles. L'opération de positionnement consiste à positionner le trièdre de référence T1 du capteur stellaire 10 par rapport à un trièdre T3 lié à la structure 11 du satellite. Connaissant la fonction de transfert entre les trièdres T1 et T3, le système SCAO sera capable de déterminer l'orientation du satellite dans l'espace au moyen de la mesure de d'orientation du capteur stellaire dans l'espace.

Selon l'état connu de la technique, le positionnement s'effectue en deux étapes. Dans une première étape, le fabricant du capteur stellaire positionne le trièdre de référence T1 par rapport à un trièdre T2 lié au capteur stellaire, défini par un ensemble de repères géométriques 12. Dans une seconde étape, réalisée par le constructeur du satellite lors d'une phase d'assemblage et de test du satellite, généralement dénommée par son acronyme anglais AIT pour *Assembly Integration and Testing,* le capteur stellaire est fixé sur la structure du satellite. Le constructeur du satellite positionne ensuite le trièdre T2 lié au capteur stellaire dans le trièdre T3 au moyen des repères géométriques 12 mesurés par un instrument de mesure optique 13 lié à la structure 11 du satellite. La combinaison des deux mesures permet de déduire la relation entre le trièdre fonctionnel du capteur stellaire et le trièdre de référence du satellite servant de référence au pointage du satellite. Cette approche souffre toutefois de limites que la présente invention cherche à pallier. En particulier, cette approche nécessite de combiner deux mesures réalisées par deux acteurs industriels distincts et en deux lieux distincts, source d'imprécision et de surcoût industriel. Cette approche nécessite en outre que le fabricant implémente sur chaque capteur stellaire un ensemble de repères optiques facilement mesurables ultérieurement par le constructeur en phase AIT. Outre le coût lié au montage de cet ensemble de repères optiques, cela nécessite pour le constructeur d'identifier et communiquer au fabricant du capteur stellaire les positions des repères optiques susceptibles d'être mesurées en AIT, sans risque d'interférence ou masquage par d'autres composants du satellite. La mesure d'alignement en AIT au moyen de repères optiques montés directement sur l'équipement constitue aussi une source d'imprécision, dans le cas où des tests différents sont réalisés sur le capteur et le satellite entre les deux mesures, la mesure faite par le fabricant du capteur et la mesure faite en AIT par le constructeur du satellite. Il reste donc désirable de disposer d'un moyen pour positionner simplement et de manière précise le repère fonctionnel d'un capteur stellaire dans un repère lié à la structure du satellite sur laquelle est monté le capteur stellaire.

A cet effet, l'invention a pour objet un dispositif pour positionner un trièdre fonctionnel d'un capteur stellaire dans un trièdre de référence lié à une structure sur laquelle est monté le capteur stellaire, le dispositif comprenant :

- une interface de fixation destinée à connecter le dispositif au capteur stellaire,
- un ensemble de repères géométriques configurés pour permettre, au moyen d'un instrument de mesure optique lié à la structure, de positionner un repère lié au dispositif dans le repère de référence lié à la structure,
- un simulateur optique comprenant un ensemble de repères optiques destinés à être mesurés par le capteur stellaire, permettant de positionner le trièdre fonctionnel du capteur stellaire dans le trièdre lié au dispositif,
  les mesures de position du trièdre fonctionnel dans le trièdre lié au dispositif, et de position du trièdre lié au dispositif dans le trièdre de référence, permettant de positionner par calcul le trièdre fonctionnel dans le trièdre de référence.

Avantageusement, la structure est la structure d'un engin spatial.

Avantageusement, le dispositif comprend un organe de commande configuré pour :

- communiquer avec le capteur stellaire de manière à déclencher et récupérer une mesure de position du trièdre fonctionnel du capteur stellaire dans le trièdre lié au dispositif,
- communiquer avec l'instrument de mesure optique de manière à déclencher et récupérer la mesure de position du trièdre lié au dispositif dans le trièdre de référence, et
- déterminer par calcul la position du trièdre fonctionnel dans le trièdre de référence.

Avantageusement, l'organe de commande est configuré pour déclencher et récupérer plusieurs mesures de position successives, du trièdre fonctionnel du capteur stellaire dans le trièdre lié au dispositif, ou du trièdre lié au dispositif dans le trièdre de référence, et d'en déterminer une valeur moyenne.

Avantageusement, l'ensemble de repères optiques du simulateur optique comprend un ensemble de signaux lumineux mesurables par le capteur stellaire.

Avantageusement, l'ensemble de signaux lumineux est configuré de manière à reproduire une image de la voute céleste, permettant au capteur stellaire de positionner le trièdre fonctionnel du capteur stellaire dans le trièdre lié au dispositif.

Avantageusement, les repères géométriques comprennent au moins un cube optique fixé sur le dispositif pour permettre une mesure de position par théodolite.

Avantageusement, les repères géométriques comprennent au moins une cible fixée sur le dispositif configurée pour permettre une mesure de position par photogrammétrie ou vidéogrammétrie.

L'invention porte notamment sur un tel dispositif, destiné à positionner le trièdre fonctionnel d'un capteur stellaire dans un trièdre de référence lié à la structure d'un satellite.

L'invention porte également sur un équipement comprenant un capteur stellaire et un dispositif de positionnement ayant les caractéristiques précédemment décrites.

L'invention porte enfin sur un procédé de positionnement d'un trièdre fonctionnel d'un capteur stellaire dans un trièdre de référence lié à une structure sur laquelle est monté le capteur stellaire, au moyen d'un dispositif ayant les caractéristiques précédemment décrites ; le procédé comprenant :

- une étape consistant à communiquer avec le capteur stellaire de manière à déclencher et récupérer une mesure de position du trièdre fonctionnel du capteur stellaire dans un trièdre lié au dispositif,
- une étape consistant à communiquer avec l'instrument de mesure optique de manière à déclencher et récupérer la mesure de position du trièdre lié au dispositif dans le trièdre de référence, et
- une étape consistant à déterminer par calcul la position du trièdre fonctionnel dans le trièdre de référence.

Avantageusement, le procédé comprend une étape consistant à activer le simulateur optique du dispositif, réalisée avant l'étape consistant à communiquer avec le capteur stellaire.

Avantageusement, la mesure de position du trièdre fonctionnel du capteur stellaire dans le trièdre lié au dispositif, ou du trièdre lié au dispositif dans le trièdre de référence, est répétée plusieurs fois ; l'étape de détermination de la position du trièdre fonctionnel dans le trièdre de référence comprenant une sous-étape de calcul d'une moyenne des mesures de position.

Avantageusement, le procédé comprend une étape préalable consistant à fixer le capteur stellaire sur la structure et/ou fixer le dispositif sur le capteur stellaire.

L'invention sera mieux comprise et d'autres avantages apparaîtront à la lecture de la description détaillée des modes de réalisation donnés à titre d'exemple sur les figures suivantes.

La figure 1, déjà présentée, représente un capteur stellaire muni d'un ensemble de références optiques pour positionner selon l'état connu de la technique un trièdre fonctionnel du capteur stellaire dans un trièdre de référence lié à un satellite auquel est fixé le capteur stellaire,
la figure 2 représente un dispositif de positionnement selon l'invention connecté à un capteur stellaire fixé sur un satellite permettant de positionner le trièdre fonctionnel du capteur stellaire dans le trièdre de référence lié au satellite,
la figure 3 représente les principales étapes du procédé selon l'invention de positionnement du capteur stellaire sur le satellite.

Par souci de clarté, les mêmes éléments portent les mêmes repères dans les différentes figures.

L'idée générale de la présente invention consiste à positionner d'une part les axes fonctionnels du capteur stellaire par rapport à un repère géométrique lié au capteur stellaire, et d'autre part ce repère géométrique par rapport à la structure du satellite, par l'intermédiaire d'un dispositif extérieur connecté au capteur stellaire. Le dispositif de positionnement est destiné à être fixé au capteur stellaire pour l'opération de mesure d'alignement réalisée par le constructeur du satellite lors de la phase d'assemblage AIT. Cette approche nouvelle permet de s'affranchir de la mesure d'alignement du capteur stellaire réalisée auparavant par le fabricant du capteur stellaire. L'opération d'alignement est réalisée entièrement après assemblage du capteur stellaire sur le satellite et par un seul acteur industriel.

L'invention porte à la fois sur le dispositif destiné à être connecté au capteur stellaire fixé sur la structure du satellite, et sur le procédé d'alignement du capteur stellaire au moyen du dispositif. Le dispositif et le procédé sont envisagés pour l'alignement d'un capteur stellaire sur un satellite. Cette application particulière n'est pas limitative de la présente invention. Plus généralement, le dispositif et le procédé sont applicables pour l'alignement de tout type de capteur optique fixé sur la structure de tout type d'engin spatial.

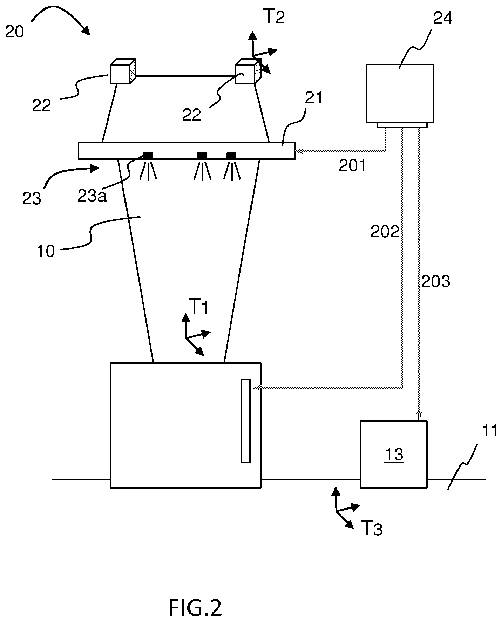

La **figure 2** représente un capteur stellaire 10 fixé sur la structure 11 d'un satellite. Comme précédemment décrit, les axes fonctionnels du capteur stellaire forment un trièdre fonctionnel T1 que l'on cherche à positionner par rapport à un trièdre de référence T3 lié à la structure 11 d'un satellite. Le dispositif 20 comprend :

- une interface de fixation 21 destinée à connecter de manière temporaire le dispositif 20 au capteur stellaire 10,
- un ensemble de repères géométriques 22 configurés pour permettre, au moyen d'un instrument de mesure optique 13 lié à la structure 11 du satellite, de positionner un repère T2 lié au dispositif dans le repère de référence T3 lié à la structure du satellite,
- un simulateur optique 23 comprenant un ensemble de repères optiques 23a destinés à être mesurés par le capteur stellaire 10, de sorte à permettre au capteur stellaire de positionner le trièdre fonctionnel T1 du capteur stellaire dans le trièdre T2 lié au dispositif 20.

Ainsi, la combinaison des mesures de position du trièdre fonctionnel T1 dans le trièdre T2 lié au dispositif (au moyen du capteur stellaire), et de position du trièdre T2 lié au dispositif dans le trièdre de référence T3 (au moyen de l'instrument de mesure optique 13), permet de positionner par calcul le trièdre fonctionnel T1 dans le trièdre de référence.

L'interface de fixation 21 peut être réalisée de toute manière connue, pour permettre de lier mécaniquement le dispositif et le capteur stellaire pendant l'opération de mesure d'alignement. Divers moyens de fixation amovible peuvent être envisagés.

Diverses techniques sont envisagées pour la mesure de position du dispositif 20 par rapport à la structure 11. Par exemple, les repères géométriques 22 peuvent être des cubes optiques fixés sur le dispositif, dont l'alignement peut être mesuré par un dispositif optique tel qu'un théodolite. Il est aussi envisagé une mesure par vidéogrammétrie ou photogrammétrie ; les repères géométriques 22 comprenant un ensemble de cible dont la position est mesurée par un capteur photographique lié à la structure du satellite, ou dont la position dans le trièdre de référence T3 est connue. D'autres techniques connues de l'homme de métier peuvent encore être envisagées sans sortir du cadre de l'invention.

Dans un mode de réalisation privilégié de l'invention, le simulateur optique 23 est formé d'un ensemble de points lumineux 23a configurés pour reproduire une image de la voute céleste. Ainsi, la mesure par le capteur stellaire de cette image de la voute céleste dont la position par rapport au dispositif est connue, permet de positionner le trièdre fonctionnel T1 du capteur stellaire par rapport au dispositif. Autrement dit, le déclenchement d'une mesure habituelle du capteur stellaire permet d'obtenir le positionnement du trièdre fonctionnel T1 du capteur stellaire dans le repère T2 lié au dispositif. Dans un autre mode de réalisation, le simulateur optique 23 est configuré pour reproduire un ensemble de points lumineux de sorte à former un motif spécifique que le capteur stellaire est configuré pour reconnaitre. Le motif spécifique, reconnaissable par le capteur stellaire, peut être formé de plusieurs signaux lumineux. Plus généralement il comprend un ensemble de repères optiques mesurables par le capteur stellaire.

En résumé, le dispositif selon l'invention comprend d'une part des moyens de simulation optique, compatible du capteur stellaire, permettant la mesure d'alignement du dispositif par rapport aux axes fonctionnels du capteur stellaire en exploitant les données fournies le capteur, et d'autre part des repères géométriques permettant la mesure d'alignement du dispositif par rapport à une référence externe ; la position des axes fonctionnels par rapport aux repères géométriques étant connue.

L'utilisation de ce dispositif pour l'alignement du capteur stellaire en phase AIT par le constructeur du satellite est particulièrement avantageuse. Cela permet de s'affranchir de la mesure d'alignement du capteur stellaire sur des cibles optiques du capteur, traditionnellement réalisée par le fabricant du capteur stellaire et pour chaque capteur. Cela permet également de s'affranchir des difficultés liées à la visibilité des cibles optiques du capteur stellaire nécessaires au positionnement de celui-ci par rapport au satellite.

Le dispositif comprend aussi un organe de commande 24 destiné au pilotage de l'opération d'alignement. L'organe de commande peut être intégré au moins partiellement au dispositif. Il peut aussi être implémenté tout ou partie dans un organe de commande globale d'un banc de mesure et de test du satellite. Il comprend un certain nombre de fonctions implémentées dans un module électronique, ainsi qu'une interface homme machine permettant le pilotage des fonctions et l'affichage des résultats de la mesure d'alignement.

Avantageusement, l'organe de commande 24 comprend des moyens pour :

- communiquer avec le capteur stellaire 10 de manière à déclencher et récupérer une mesure de position du trièdre fonctionnel T1 du capteur stellaire dans le trièdre lié au dispositif T2,
- communiquer avec l'instrument de mesure optique 13 de manière à déclencher et récupérer la mesure de position du trièdre lié au dispositif T2 dans le trièdre de référence T3 ;
- déterminer par calcul la position du trièdre fonctionnel T1 dans le trièdre de référence T3.

Dans le mode de réalisation privilégié de l'invention, le simulateur optique est formé par un ensemble de signaux lumineux destinés à être mesurées par le capteur stellaire. Dans ce cas, l'organe de commande peut également comprendre des moyens pour activer et désactiver cet ensemble de signaux lumineux pour permettre la mesure par le capteur stellaire.

La figure 2 représente des liaisons fonctionnelles 201, 202 et 203 entre l'organe de commande et respectivement le simulateur optique (activation/désactivation du simulateur optique), le capteur stellaire (déclenchement et récupération mesure de T1 dans T2), et l'instrument de mesure optique (déclenchement et récupération mesure de T2 dans T3)

La mesure de position d'un trièdre par rapport à un autre trièdre peut se présenter sous diverses formes mathématiques. Dans le domaine aéronautique, il est répandu de positionner les axes fonctionnels d'un capteur stellaire par rapport à un référentiel au moyen d'un quaternion. Ainsi, la mesure du positionnement d'un premier trièdre dans un second trièdre peut s'exprimer mathématiquement par les quatre valeurs du quaternion fournie par l'instrument de mesure optique, positionnant le premier trièdre dans le second trièdre. La position et l'orientation d'un repère dans un autre repère peuvent être exprimées au moyen d'autres formulations mathématiques sans sortir du cadre de l'invention, comme par exemple au moyen des angles d'Euler ou d'une matrice trois par trois.

Dans le cas où les mesures d'alignement sont exprimées par un quaternion, le calcul final d'alignement est obtenu par combinaison des deux mesures précédentes, au moyen d'une relation du type :

$$Q\_T_{1\text{-}3} = \text{transpose}\,(Q\_T_{1\text{-}2})\;{}^{**}\;Q\_{disp}\;{}^{**}\;Q\_T_{2\text{-}3}$$

dans laquelle $Q\_T_{1\text{-}3}$ est le quaternion du trièdre fonctionnel du capteur stellaire dans le trièdre de référence du satellite, $Q\_T_{1\text{-}2}$ est le quaternion fourni par le capteur stellaire, $Q\_T_{2\text{-}3}$ est le quaternion fourni par l'instrument de mesure optique lié au satellite, et $Q\_{disp}$ est le quaternion propre du dispositif quantifiant la position du simulateur optique 23 par rapport aux repères géométriques 22.

On comprend l'intérêt du dispositif selon l'invention qui permet de réaliser en un même endroit, par un unique acteur industriel, et sensiblement au même moment, les deux mesures de position. Le quaternion $Q\_{disp}$ quantifiant la position du simulateur optique par rapport à T2 étant caractérisé une seule fois pour le dispositif. Par la conception du simulateur optique 23 et des repères géométriques 22, le dispositif est configuré pour assurer une grande stabilité à ce quaternion.

Notons aussi que pour accroitre la précision de l'opération d'alignement, il est envisagé de configurer l'organe de commande de manière à déclencher et récupérer plusieurs mesures de position successives, du trièdre fonctionnel T1 du capteur stellaire dans le trièdre lié au dispositif T2, ou du trièdre lié au dispositif T2 dans le trièdre de référence T3, et d'en déterminer une valeur moyenne.

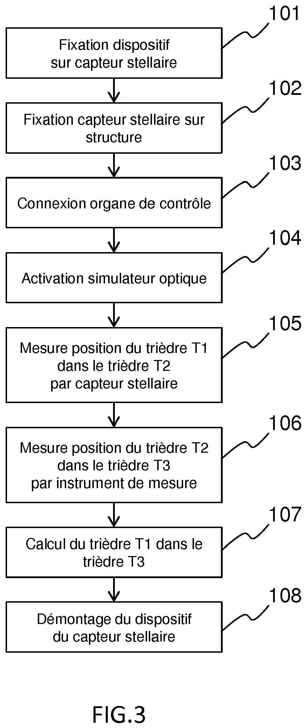

La **figure 3** représente les principales étapes du procédé selon l'invention de positionnement du capteur stellaire sur le satellite au moyen d'un dispositif tel que précédemment décrit.

Le procédé de positionnement comprend :

- une étape 101 consistant à fixer le capteur stellaire 10 sur la structure 11 du satellite,

- une étape 102 consistant à fixer le dispositif 20 sur le capteur stellaire 10, l'étape 102 pouvant optionnellement être réalisée avant l'étape 101 de fixation du capteur stellaire sur la structure,
- une étape 103 consistant à connecter l'organe de commande 24 du dispositif, notamment avec le simulateur optique, le capteur stellaire et l'instrument de mesure optique respectivement au moyen des liaisons 201, 202 et 203,
- une étape 104 consistant à activer le simulateur optique 23, de manière à générer l'ensemble de signaux lumineux 23a mesurables par le capteur stellaire 10,
- une étape 105 consistant à communiquer avec le capteur stellaire 10 de manière à déclencher et récupérer une mesure de position du trièdre fonctionnel T1 du capteur stellaire dans le trièdre T2,
- une étape 106 consistant à communiquer avec l'instrument de mesure optique 13 de manière à déclencher et récupérer la mesure de position du trièdre T2 dans le trièdre de référence T3,
- une étape 107 consistant à déterminer par calcul la position du trièdre fonctionnel T1 dans le trièdre de référence T3.
- une étape 108 consistant à désolidariser et démonter le dispositif 20 du capteur stellaire 10.

Notons que les étapes 105 et 106 consistant à déclencher et récupérer les mesures de position par le capteur stellaire et l'instrument de mesure optique peuvent être répétées plusieurs fois. Dans ce cas, l'étape 107 de détermination de la position du trièdre fonctionnel T1 dans le trièdre de référence T3 comprend avantageusement une étape de calcul d'une moyenne des mesures de position.

## Revendications

1. Dispositif pour positionner un trièdre fonctionnel (T1) d'un capteur stellaire (10) dans un trièdre de référence (T3) lié à une structure d'un engin spatial (11) sur laquelle est monté le capteur stellaire (10), le dispositif comprenant :

   • une interface de fixation (21) destinée à connecter le dispositif (20) au capteur stellaire (10),
   • un ensemble de repères géométriques (22) configurés pour permettre, au moyen d'un instrument de mesure optique (13) lié à la structure (11), de positionner un repère (T2) lié au dispositif (20) dans le repère de référence (T3) lié à la structure (11),
   • un simulateur optique (23) comprenant un ensemble de repères optiques (23a) destinés à être mesurés par le capteur stellaire (10), permettant de positionner le trièdre fonctionnel (T1) du capteur stellaire dans le trièdre (T2) lié au dispositif (20),

   les mesures de position du trièdre fonctionnel (T1) dans le trièdre (T2) lié au dispositif (20), et de position du trièdre (T2) lié au dispositif dans le trièdre de référence (T3), permettant de positionner par calcul le trièdre fonctionnel (T1) dans le trièdre de référence (T3).

2. Dispositif selon la revendication 1, comprenant un organe de commande (24) configuré pour :

   • communiquer avec le capteur stellaire (10) de manière à déclencher et récupérer une mesure de position du trièdre fonctionnel (T1) du capteur stellaire (10) dans le trièdre (T2) lié au dispositif (20),
   • communiquer avec l'instrument de mesure optique (13) de manière à déclencher et récupérer la mesure de position du trièdre (T2) lié au dispositif (20) dans le trièdre de référence (T3) ;
   • déterminer par calcul la position du trièdre fonctionnel (T1) dans le trièdre de référence (T3).

3. Dispositif selon la revendication 2, dont l'organe de commande (24) est configuré pour déclencher et récupérer plusieurs mesures de position successives, du trièdre fonctionnel (T1) du capteur stellaire (10) dans le trièdre (T2) lié au dispositif (20), ou du trièdre (T2) lié au dispositif (20) dans le trièdre de référence (T3), et d'en déterminer une valeur moyenne.

4. Dispositif selon l'une des revendications précédentes, dont l'ensemble de repères optiques du simulateur optique (23) comprend un ensemble de signaux lumineux (23a) mesurables par le capteur stellaire (10).

5. Dispositif selon la revendication 4, dont l'ensemble de signaux lumineux (23a) est configuré de manière à reproduire une image de la voute céleste, permettant au capteur stellaire (10) de positionner le trièdre fonctionnel (T1) du capteur stellaire (10) dans le trièdre (T2) lié au dispositif (20).

6. Dispositif selon l'une des revendications précédentes, dont les repères géométriques (22) comprennent au moins un cube optique fixé sur le dispositif (20) pour permettre une mesure de position par théodolite.

**7.** Dispositif selon l'une des revendications précédentes, dont les repères géométriques (22) comprennent au moins une cible fixée sur le dispositif (20) configurée pour permettre une mesure de position par photogrammétrie ou vidéogrammétrie.

**8.** Dispositif selon l'une des revendications précédentes, destiné à positionner le trièdre fonctionnel (T1) d'un capteur stellaire (10) dans un trièdre de référence (T3) lié à la structure (11) d'un satellite.

**9.** Equipement comprenant un capteur stellaire (10) et un dispositif de positionnement (20) selon l'une des revendications 1 à 8.

**10.** Procédé de positionnement d'un trièdre fonctionnel (T1) d'un capteur stellaire (10) dans un trièdre de référence (T3) lié à une structure d'un engin spatial (11) sur laquelle est monté le capteur stellaire (10), au moyen d'un dispositif (20) selon l'une des revendications 1 à 8 ; le procédé comprenant :

   • une étape (105) consistant à communiquer avec le capteur stellaire de manière à déclencher et récupérer une mesure de position du trièdre fonctionnel (T1) du capteur stellaire dans un trièdre lié au dispositif (T2),
   • une étape (106) consistant à communiquer avec l'instrument de mesure optique (13) de manière à déclencher et récupérer la mesure de position du trièdre (T2) lié au dispositif (20) dans le trièdre de référence (T3) ;
   • une étape (107) consistant à déterminer par calcul la position du trièdre fonctionnel (T1) dans le trièdre de référence (T3).

**11.** Procédé de positionnement selon la revendication 10, au moyen du dispositif selon la revendication 4, comprenant une étape (104) consistant à activer le simulateur optique (23) du dispositif (20), réalisée avant l'étape (105) consistant à communiquer avec le capteur stellaire (10).

**12.** Procédé de positionnement selon l'une des revendications 10 ou 11, dans lequel la mesure de position du trièdre fonctionnel (T1) du capteur stellaire (10) dans le trièdre (T2) lié au dispositif (20), ou du trièdre (T2) lié au dispositif (20) dans le trièdre de référence (T3), est répétée plusieurs fois; l'étape (107) de détermination de la position du trièdre fonctionnel (T1) dans le trièdre de référence (T3) comprenant une sous-étape de calcul d'une moyenne des mesures de position.

**13.** Procédé de positionnement selon l'une des revendications 10 à 12, comprenant une étape (101 ; 102) préalable consistant à fixer le capteur stellaire (10) sur la structure (11) et/ou fixer le dispositif (20) sur le capteur stellaire (10).

**Patentansprüche**

**1.** Vorrichtung zum Positionieren eines funktionellen Trieders (T1) eines Sternsensors (10) in einem Referenz-Trieder (T3), der mit einer Raumfahrzeugstruktur (11) verbunden ist, an der der Sternsensor (10) montiert ist, wobei die Vorrichtung Folgendes umfasst:

   • eine Befestigungsschnittstelle (21) zum Verbinden der Vorrichtung (20) mit dem Sternsensor (10);
   • einen Satz von geometrischen Markierungen (22), um es zuzulassen, mithilfe eines mit der Struktur (11) verbundenen optischen Messinstruments (13) eine mit der Vorrichtung (20) verbundene Markierung (T2) in der mit der Struktur (11) verbundenen Referenzmarkierung (T3) zu positionieren;
   • einen optischen Simulator (23), der einen Satz von optischen Markierungen (23a) zum Messen durch den Sternsensor (10) umfasst, so dass der funktionelle Trieder (T1) des Sternsensors in dem mit der Vorrichtung (20) verbundenen Trieder (T2) positioniert werden kann,

   wobei es die Messungen der Position des funktionellen Trieders (T1) in dem mit der Vorrichtung (20) verbundenen Trieder (T2) und der Position des mit der Vorrichtung verbundenen Trieders (T1) in dem Referenz-Trieder (T3) zulassen, das funktionelle Trieder (T1) in dem Referenz-Trieder (T3) durch Berechnung zu positionieren.

**2.** Vorrichtung nach Anspruch 1, die eine Steuereinheit (24) umfasst, konfiguriert zum:

   • Kommunizieren mit dem Sternsensor (10), um eine Positionsmessung des funktionellen Trieders (T1) des Sternsensors (10) in dem mit der Vorrichtung (20) verbundenen Trieder (T2) auszulösen und zu gewinnen;
   • Kommunizieren mit dem optischen Messinstrument (13), um die Positionsmessung des mit der Vorrichtung (20) verbundenen Trieders (T2) in dem Referenz-Trieder (T3) auszulösen und zu gewinnen;
• Bestimmen der Position des funktionellen Trieders (T1) in dem Referenz-Trieder (T3) durch Berechnung.

3. Vorrichtung nach Anspruch 2, wobei die Steuereinheit (24) zum Auslösen und Gewinnen mehrerer aufeinanderfolgender Positionsmessungen des funktionellen Trieders (T1) des Sternsensors (10) in dem mit der Vorrichtung (20) verbundenen Trieder (T2) oder des mit der Vorrichtung (20) verbundenen Trieders (T1) in dem Referenz-Trieder (T3) und zum Bestimmen eines durchschnittlichen Wertes davon konfiguriert ist.

4. Vorrichtung nach einem der vorherigen Ansprüche, wobei der Satz von optischen Markierungen des optischen Simulators (23) einen Satz von Lichtsignalen (23a) umfasst, die von dem Sternsensor (10) gemessen werden können.

5. Vorrichtung nach Anspruch 4, wobei der Satz von Lichtsignalen (23a) zum Reproduzieren eines Bildes des Sternenhimmels konfiguriert ist, so dass der Sternsensor (10) den funktionellen Trieder (T1) des Sternsensors (10) in dem mit der Vorrichtung (20) verbundenen Trieder (T2) positionieren kann.

6. Vorrichtung nach einem der vorherigen Ansprüche, wobei die geometrischen Markierungen (22) wenigstens einen an der Vorrichtung (20) befestigten optischen Würfel umfassen, um eine Theodoliten-Positionsmessung zuzulassen.

7. Vorrichtung nach einem der vorherigen Ansprüche, wobei die geometrischen Markierungen (22) wenigstens ein an der Vorrichtung (20) befestigtes Ziel umfassen, wobei das Ziel so konfiguriert ist, dass es eine Fotogrammetrie- oder Videogrammetrie-Positionsmessung zulässt.

8. Vorrichtung nach einem der vorherigen Ansprüche zum Positionieren des funktionellen Trieders (T1) eines Sternsensors (10) in einem mit der Struktur (11) eines Satelliten verbundenen Referenz-Trieder (T3).

9. Gerät, das einen Sternsensor (10) und eine Positionierungsvorrichtung (20) nach einem der Ansprüche 1 bis 8 umfasst.

10. Verfahren zum Positionieren eines funktionellen Trieders (T1) eines Sternsensors (10) in einem mit einer Struktur (11) eines Raumfahrzeugs verbundenen Referenz-Trieder (T3), an dem der Sternsensor (10) montiert ist, mittels einer Vorrichtung (20) nach einem der Ansprüche 1 bis 8, wobei die Vorrichtung Folgendes umfasst:

 • einen Schritt (105) des Kommunizierens mit dem Sternsensor (10), um eine Positionsmessung des funktionellen Trieders (T1) des Sternsensors in einem mit der Vorrichtung verbundenen Trieder (T2) auszulösen und zu gewinnen;
 • einen Schritt (106) des Kommunizierens mit dem optischen Messinstrument (13), um die Positionsmessung des mit der Vorrichtung (20) verbundenen Trieders (T2) in dem Referenz-Trieder (T3) auszulösen und zu gewinnen;
 • einen Schritt (107) des Bestimmens der Position des funktionellen Trieders (T1) in dem Referenz-Trieder (T3) durch Berechnung.

11. Positionierungsverfahren nach Anspruch 10 mittels der Vorrichtung nach Anspruch 4, das einen Schritt (104) des Aktivierens des optischen Simulators (23) der Vorrichtung (20) beinhaltet, ausgeführt vor dem Schritt (105) des Kommunizierens mit dem Sternsensor (10).

12. Positionierungsverfahren nach Anspruch 10 oder 11, wobei die Messung der Position des funktionellen Trieders (T1) des Sternsensors (10) in dem mit der Vorrichtung (20) verbundenen Trieder (T2) oder der des mit der Vorrichtung (20) verbundenen Trieders (T2) in dem Referenz-Trieder (T3) mehrere Male wiederholt wird, wobei der Schritt (107) des Bestimmens der Position des funktionellen Trieders (T3) in dem Referenz-Trieder (T3) einen Teilschritt des Berechnens eines Durchschnitts der Positionsmessungen beinhaltet.

13. Positionierungsverfahren nach einem der Ansprüche 10 bis 12, das einen Vorabschritt (101; 102) des Befestigens des Sternsensors (10) an der Struktur (11) und/oder des Befestigens der Vorrichtung (20) an dem Sternsensor (10) beinhaltet.

**Claims**

1. A device for positioning a functional trihedron (T1) of a star sensor (10) in a reference trihedron (T3) linked to a structure (11) of a spacecraft, on which said star sensor (10) is mounted, said device comprising:

   • an attachment interface (21) intended to connect said device (20) to said star sensor (10);
   • a set of geometric markers (22) configured to allow, by means of an optical measurement instrument (13) linked to said structure (11), a marker (T2) linked to said device (20) to be positioned in the reference marker (T3) linked to said structure (11);
   • an optical simulator (23) comprising a set of optical markers (23a) intended to be measured by said star sensor (10), allowing said functional trihedron (T1) of said star sensor to be positioned in the trihedron (T2) linked to said device (20),

   the position measurements of said functional trihedron (T1) in said trihedron (T2) linked to said device (20) and of said trihedron (T2) linked to said device in said reference trihedron (T3) allowing said functional trihedron (T1) to be positioned in said reference trihedron (T3) by computation.

2. The device according to claim 1, comprising a control unit (24) configured to:

   • communicate with said star sensor (10) so as to trigger and recover a position measurement of said functional trihedron (T1) of said star sensor (10) in said trihedron (T2) linked to said device (20);
   • communicate with said optical measurement instrument (13) so as to trigger and recover the position measurement of said trihedron (T2) linked to said device (20) in said reference trihedron (T3);
   • determine the position of said functional trihedron (T1) in said reference trihedron (T3) by computation.

3. The device according to claim 2, wherein said control unit (24) is configured to trigger and recover a plurality of successive position measurements of said functional trihedron (T1) of said star sensor (10) in said trihedron (T2) linked to said device (20) or of said trihedron (T2) linked to said device (20) in said reference trihedron (T3) and to determine an average value therefrom.

4. The device according to any one of the preceding claims, wherein the set of optical references of said optical simulator (23) comprises a set of light signals (23a) that can be measured by said star sensor (10).

5. The device according to claim 4, wherein said set of light signals (23a) is configured so as to reproduce an image of the galactic centre, allowing said star sensor (10) to position said functional trihedron (T1) of said star sensor (10) in said trihedron (T2) linked to said device (20).

6. The device according to any one of the preceding claims, wherein said geometric markers (22) comprise at least one optical cube fixed on said device (20) to allow a theodolite position measurement.

7. The device according to any one of the preceding claims, wherein said geometric markers (22) comprise at least one target fixed on said device (20), which target is configured to allow a photogrammetry or videogrammetry position measurement.

8. The device according to any one of the preceding claims, intended to position said functional trihedron (T1) of a star sensor (10) in a reference trihedron (T3) linked to said structure (11) of a satellite.

9. Equipment comprising a star sensor (10) and a positioning device (20) according to any one of claims 1 to 8.

10. A method for positioning a functional trihedron (T1) of a star sensor (10) in a reference trihedron (T3) linked to a structure (11) of a spacecraft, on which said star sensor (10) is mounted, by means of a device (20) according to any one of claims 1 to 8, said device comprising:

    • a step (105) of communicating with said star sensor (10) so as to trigger and recover a position measurement of said functional trihedron (T1) of said star sensor in a trihedron (T2) linked to said device;
    • a step (106) of communicating with said optical measurement instrument (13) so as to trigger and recover the position measurement of said trihedron (T2) linked to said device (20) in said reference trihedron (T3);
    • a step (107) of determining the position of said functional trihedron (T1) in said reference trihedron (T3) by computation.

11. The method for positioning according to claim 10, by means of the device according to claim 4, comprising a step (104) of activating said optical simulator (23) of said device (20), which step is carried out before said step (105) of communicating with said star sensor (10).

12. The method for positioning according to claim 10 or 11, wherein the position measurement of said functional trihedron (T1) of said star sensor (10) in said trihedron (T2) linked to said device (20) or of said trihedron (T2) linked to said device (20) in said reference trihedron (T3) is repeated a number of times, said step (107) of determining the position of said functional trihedron (T3) in said reference trihedron (T3) comprising a sub-step of computing an average of the position measurements.

13. The method for positioning according to any one of claims 10 to 12, comprising a prior step (101; 102) of fixing said star sensor (10) on said structure (11) and/or of fixing said device (20) on said star sensor (10).

FIG.1
(ART ANTERIEUR)

FIG.2

Fixation dispositif
sur capteur stellaire — 101

Fixation capteur stellaire sur
structure — 102

Connexion organe de contrôle — 103

Activation simulateur optique — 104

Mesure position du trièdre T1
dans le trièdre T2
par capteur stellaire — 105

Mesure position du trièdre T2
dans le trièdre T3
par instrument de mesure — 106

Calcul du trièdre T1 dans le
trièdre T3 — 107

Démontage du dispositif
du capteur stellaire — 108

FIG.3

**EP 3 002 554 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2816406